# EUROPEAN PATENT APPLICATION

(11) **EP 0 814 101 A2**
(43) Date of publication of application: **29.12.1997**
(21) Application number: 97109522.9
(22) Date of filing: 12.06.1997
(51) Int. Cl.: C08F 20/06

(54) **Improved polycarboxylic acids**

(30) Priority: 18.06.1996 IT MI961237
(71) Applicant: 3V SIGMA S.p.A, I-20121 Milano (IT)
(72) Inventor: Zanotti Russo, Matteo, 40122 Bologna (IT); Berte', Ferruccio, 24100 Bergamo (IT)
(74) Representative: Spadaro, Marco

(57) **Abstract**

The present invention relates to a process for the preparation of crosslinked polymers and copolymers of acrylic acid and methacrylic acid of formula 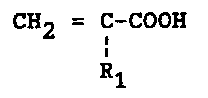 wherein
R₁ is hydrogen or methyl.
Said process, using ethyl formate as solvent, allows to obtain polymers having low residue of monomer and of solvent and with higher thickening capacity.

## Description

The present invention relates to polymers and copolymers of unsaturated carboxylic acids, in particular polymers and copolymers of acrylic acid and methacrylic acid and their derivatives.

### Background of the invention

Omopolymers and copolymers of unsaturated carboxylic acids, such as acrylic acid, methacrylic acid, itaconic acid, maleic acid with other vinylidene monomers, are well known, as described in patent US 2,798,053 and in subsequent patents on the same matter.

For example, subsequent patents US 4,375,533, US 4,419,502 and 4,996,274 disclose polymerizations carried out in different solvent systems, such as aromatic, hydrocarburic, halogenated, wherein said unsaturated acids polymerize by precipitation in the form of fine powders, which are subsequently dried, in order to be used as thickening and suspending agents in different industrial fields.

The solvents and monomers used in said patents however are toxic, and residue quantities in the obtained products hinder their use in the cosmetic and pharmaceutical field.

The possibility of using each of the solvents having a hydrogen bond number between 0.7 and 1.7 and solubility parameters between 8 and 15 is claimed in US 4,267,103, in particular ethyl acetate is suggested when the more than 3% by weight of monomer acids in the monomer mixture is in neutral form.

US 4,758,641 claims the use of acetone and alkyl acetates, already cited in US 4,267,103, used for the polymerization, but with a water content limited to 1% by weight with the scope to reduce the content of monomer residue under 0.2% in order to lower the toxicity of the finished product. Said solvents have a low grade of toxicity, nevertheless they are difficult to remove from the finished product which generally contains about 0.8% by weight of them, unless it is treated with prolonged drying systems at high temperature, whereby the polymer is degraded causing the formation of unwanted by-products.

Relying on the state of the art, then it comes out that it is impossible to produce a polymer such as polyacrylic acid with a of residue monomer content lower than 0.2% by weight and with a low-toxicity solvent residue whose content is below 0.8 % by weight.

### Abstract of the invention

Surprisingly, it has been found that when ethyl formate is used as the solvent for the polymerization of the above monomers, wherein the mixture of monomer acids is neutralized even with less than 3% by weight or is not neutralized at all, the monomer residue in the finished product is even lower than 0.1% by weight, and the solvent residue is even lower than 0.15% by weight.

Moreover, the so obtained polymer shows a thickening capacity higher than the one obtained according to US 4,758,641 and US 4,267,103, at the same conditions.

Therefore, it is an object of the present invention a process for the preparation of polymers and copolymers of acrylic acid and methacrylic acid and their derivatives characterized in that the polymerization is carried out in ethyl formate at a temperature ranging from 40 to 80°C, wherein the monomer mixture is up to 30% by weight of the whole polymerization mixture.

It is another object of the present invention an omopolymer or a copolymer both as such and as obtainable by the process according to the present invention, characterized in that they have a monomer residue content lower than 0.1% by weight and a solvent residue content lower than 0.15% by weight.

It is another object of the present invention a method for thickening an aqueous composition which comprises the addition of a suitable amount of a polymer or copolymer of the present invention.

### Detailed disclosure of the invention

The omopolymers and copolymers according to the present invention are obtained by polymerizing unsaturated carboxylic acids and/or their salts containing at least a double activated olefinic bond, polycarboxylic acids and their anhydrides included.

The monomeric mixture is polymerized by precipitation from ethyl formate, thereby, after a vacuum drying, a polymer product in the form of powder is obtained.

Ethyl formate is a solvent having low toxicity, naturally occuring in food substances, it is admitted for the use in food as flavouring agent, and it is included in the "GRAS" list of the substances generally known as safe. Moreover it has an oral LD₅₀ of 4290 mg/kg in the rat (Snyder, R (Ed.), Ethel Browning's Toxicity and Metabolism of Industrial Solvents. Second Edition vol. 3, Alcohols and Ethers. NY: Elsevier, 1992, 312) which allows a classification among not noxious substances.

The monomeric mixture, other than main monomers, can include crosslinking agents. The main monomers are at least 95% by weight of the monomeric mixture, crosslinking agents are not more than 5% by weight of the monomeric mixture.

According to the present invention suitable monomers are monounsaturated acrylic acids having the following formula: 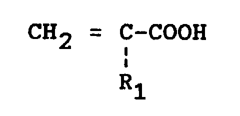 wherein
R₁ is hydrogen or methyl.

The monomer mixture can contain up to 5% by weight of crosslinking monomers containing at least two CH₂=CH-groups selected from the group of the polyalkenyl polyethers having more than one alkenyl group per molecule.

Typical crosslinking monomers are: polyallyl pentaerythritol, polyallyl saccharose, trimethylolpropane diallyl ether, diallyl ethers of polyether diols having molecular weight between 50 and 1,000.

The polymerization solvent of this invention is ethyl formate; the amount of solvent must be such as the monomeric mixture is not more than 30 % by weight of the whole polymerization mixture.

The polymerization in ethyl formate takes place generally in the presence of a radicalic initiator, in a closed reactor with inert atmosphere and with autogenous or artificially induced pressure, or in a open reactor at atmospheric pressure with solvent reflux.

The polymerization temperature is between 40 and 80°C, preferably between 40 and 60°C.

Suitable radicalic initiators are, for example, di(2-ethylhexyl)peroxydicarbonate, di(sec-butyl)peroxydicarbonate, di(cyclohexyl)peroxydicarbonate, di(isopropyl)peroxydicarbonate, di(cetyl)peroxydicarbonate, di(t-butyl)peroxydicarbonate, di(n-propyl)peroxydicarbonate, di(t-butylcyclohexyl)peroxydicarbonate and the other similar peroxydicarbonates.

In order to have a more fluid polymeric mixture, part of the carboxylic groups of the used monomers can be neutralized before starting the polymerization or during the polymerization process, or salts of the carboxylic acids in the monomeric mixture can be used, such that less than 3% by weight of the carboxylic groups of the monomeric mixture is in the form of alkali or alkaline-earth metal salts, ammonium or alkylammonium salts.

The following examples further illustrate the invention, according to which the use of ethyl formate as solvent system instead of a typical solvent among those mentioned in US 4,758,641, such as ethyl acetate, yields polymeric powders containing lower solvent residue and having higher viscosity of the 0.5% by weight aqueous solution neutralized with 10% NaOH solution, showing better thickening properties.

### Examples 1-4

These comparison tests reproduce the conditions of the state of the art compared with what claimed in the present invention; Examples 1 and 2 are comparison examples representative of the solvents and of the operative conditions claimed in US 4,758,641 and the solvent used is ethyl acetate, whereas Examples 3 and 4 are representative of the present invention and the solvent used is ethyl formate.

In the examples, acrylic acid was neutralized with potassium carbonate, and the obtained mixture was loaded in a 3 l reactor with cooling jacket and stirrer. 800 g of solvent having 98.5% titre and with water content lower than 200 ppm, the crosslinking agent (triallyl pentaerythritol) and the initiator (di(cetyl)peroxydicarbonate) were added. The mixture was bubbled with a nitrogen flux for 30 minutes, then heated to 55°C for about 8 hours. The reactor content was dried for 8 hours in a rotary vacuum equipment operating at 80°C.

Table 1 below shows the operating conditions and the properties of the polymers obtained, wherein AA indicates acrylic acid, APE indicates triallylpentaerythritol and DCP indicates dicetylperoxydicarbonate.

**Table 1**

| Test n. | AA(g) | K₂CO₃ moles % | Solvent (g) | APE (g) | DCP (g) | Viscosity sol. 0.5% (CpS) | Solvent Residue (ppm) | Monomer Residue (ppm) |
|---|---|---|---|---|---|---|---|---|
| 1 | 145 | 2.16 | 800 | 2 | 1.45 | 14,000 | 8,800 | 1,200 |
| 2 | 95 | 2.2 | 800 | 1.5 | 0.95 | 12,800 | 8,200 | 600 |
| 3 | 145 | 2.16 | 800 | 2 | 1.45 | 38,000 | 1,300 | 600 |
| 4 | 95 | 2.2 | 800 | 1.5 | 0.95 | 36,500 | 1,450 | 500 |

The polymers resulting from tests 1 and 2 contain more than 8,000 ppm (0.8 % by weight) of solvent residue, and the 0.5% weight solutions, neutralized with a 10% NaOH solution, show a viscosity under 15,000 CpS. The polymers resulting from tests 3 and 4 contain less than of 1,500 ppm (0.15% weight) of solvent residue, and 0.5% weight solutions, neutralized with a 10% NaOH solution, show a viscosity higher than 35,000 CpS.

### Examples 5 and 6

The following examples aim to demonstrate that the properties claimed in the present invention are due to the use of ethyl formate independently of the operating conditions, then the comparison test described in example 5 reproduces exactly the conditions described in example 4 of US 4,758,641, present example 6 instead discloses the use of ethyl formate as solvent, according to the present invention. In both examples, acrylic acid was neutralized with potassium carbonate, and the obtained mixture was loaded in a 3 l reactor with cooling jacket and stirrer. 705 g of solvent having 99.5% titre and water content lower than 200 ppm, the crosslinking agent (triallyl pentaeryithritol) and the initiator di(2-ethylhexyl)peroxydicarbonate were added. The mixture was bubbled with a nitrogen flux for 30 minutes, then heated to 50°C for about 7 hours. The content of the reactor was dried for 12 hours in a rotary vacuum equipment operating at 80°C.

Table 2 below shows the operating conditions and the properties of the obtained polymers, wherein AA indicates acrylic acid, APE indicates triallyl pentaerythritol and DEEP indicates di(2-ethylhexyl)peroxydicarbonate.

**Table 2**

| Test n. | AA(g) | K₂CO₃ moles % | Solvent (g) | APE (g) | DEEP (g) | Viscosity sol. 0.5% (CpS) | Viscosity sol. 1% (CpS) | Solvent Residue (ppm) | Monomer Residue (ppm) |
|---|---|---|---|---|---|---|---|---|---|
| 5 | 96.14 | 2.91 | 705 | 1.1 | 0.48 | 32,000 | 48,000 | 8,500 | 600 |
| 6 | 96.14 | 2.91 | 705 | 1.1 | 0.48 | 36,500 | 66,000 | 1,450 | 500 |

According to what claimed in the present invention, the polymer obtained in test n. 6 shows a higher viscosity for its neutralized solution both at 0.5% and at 1% concentration in water and a lower content of solvent residue with respect to the polymer obtained in comparison test n. 5.

The present invention is applicable to the industrial production of omopolymers and copolymers of acrylic acids and their derivatives. Said omopolymers and copolymers are useful as thickening and suspending agents in particular in cosmetic and pharmaceutical, textile, paper, inks and varnishes industry.

## Claims

1. A process for the preparation of crosslinked omopolymers or copolymers of unsaturated carboxylic acids of formula 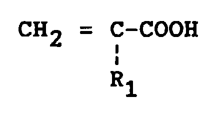 wherein
R₁ is hydrogen or methyl,
characterized in that the polymerization is carried out in ethyl formate at a temperature ranging from 40 to 80°C, wherein the mixture of monomers constitutes up to 30% by weight of the whole polymerization mixture.

2. A process according to claim 1, wherein the polymerization temperature ranges from 40 to 60°C.

3. A process according to claim 1, wherein the polymerization takes place in the presence of a radicalic initiator.

4. A process according to claim 3, wherein the radicalic initiator is selected from the group consisting of di(2-ethylhexyl)peroxydicarbonate, di(sec-butyl)peroxydicarbonate, di(cyclohexyl)peroxydicarbonate, di(isopropyl)peroxydicarbonate, di(cetyl)peroxydicarbonate, di(t-butyl)peroxydicarbonate, di(n-propyl)peroxydicarbonate, di(t-butylcyclohexyl)peroxydicarbonate.

5. A process according to claim 1, wherein the reaction is carried out in a closed reactor with inert atmosphere and with autogenous or artificially induced pressure, or in an open reactor at atmospheric pressure with solvent reflux.

6. A process according to claim 1, wherein the mixture of monomers contains up to 5% by weight of vinylidene polyfunctional monomers containing at least two CH₂=CH-groups as crosslinking agents.

7. A process according to claim 6, wherein the crosslinking monomer or monomers are selected in the group consisting of polyalkenyl polyethers having more than one alkenyl group per molecule.

8. A process according to claim 7, wherein the crosslinking monomer or monomers are selected from the group consisting of polyallyl pentaeryithritol, polyallyl saccharose, trimethylol propane diallylether, diallylethers of polyether diols with molecular weight between 50 and 1,000.

9. A process according to claim 1, wherein less than 3% by weight of the carboxylic groups of the monomeric mixture are in form of salt.

10. A process according to claim 9, wherein the salts are selected from the group consisting of alkali or alkaline-earth metal salts, ammonium or alkylammonium salts.

11. An omopolymer or a copolymer of unsaturated carboxylic acids of formula 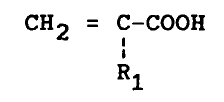 wherein
R₁ is hydrogen or methyl,
containing a residue of monomer or monomers lower than 0.1% by weight and containing a solvent residue lower than 0.15% by weight.

12. An omopolymer or a copolymer according to claim 11 crosslinked with polyfunctional vinylidene monomers containing at least two CH₂=CH- groups.

13. An omopolymer or a copolymer according to claim 11, wherein the crosslinking monomer or monomers are selected from the group consisting of polyalkenyl polyethers having more than one alkenyl group per molecule.

14. An omopolymer or a copolymer according to claim 11, wherein the crosslinking monomer or monomers are selected from the group consisting of polyallyl pentaerythritol, polyallyl saccharose, trimethylol propane diallylether, diallylethers of polyether diols with molecular weight between 50 and 1,000.

15. An omopolymer or a copolymer according to claim 11, wherein less than 3% by weight of the carboxylic groups of the monomeric mixture is in the form of salt.

16. An omopolymer or a copolymer according to claim 11, wherein the salts are selected from the group consisting of alkali or alkaline-earth metal salts, ammonium or alkylammonium salts.

17. The use of a polymer of claim 11 as thickening agent for aqueous compositions.
